Europäisches Patentamt

European Patent Office

Office européen des brevets

(11) Veröffentlichungsnummer: **0 375 626**
**A2**

## (12) EUROPÄISCHE PATENTANMELDUNG

(21) Anmeldenummer: 89810972.3

(22) Anmeldetag: 21.12.89

(51) Int. Cl.⁵ **A47B 17/02, A47B 21/02, B23Q 11/08, F16P 1/02**

(30) Priorität: 22.12.88 CH 4757/88

(43) Veröffentlichungstag der Anmeldung:
27.06.90 Patentblatt 90/26

(84) Benannte Vertragsstaaten:
AT BE CH DE ES FR GB GR IT LI LU NL SE

(71) Anmelder: STILO AG
Steig 611
CH-9055 Bühler(CH)

(72) Erfinder: Hengartner, Bruno
Oberhofstettenstr. 30A
CH-9012 St. Gallen(CH)
Erfinder: Kriemler, Edi
Egg 677
CH-9055 Bühler(CH)
Erfinder: Schmid, Jürg
Kilchbergstr. 163
CH-8038 Zürich(CH)

(74) Vertreter: Troesch, Hans Alfred, Dr. Ing. et al
Walchestrasse 19
CH-8035 Zürich(CH)

(54) **Faltenbalg für Büromöbel sowie Vorrichtung zum Nivellieren von Tischauflageflächen.**

(57) Bei einem räumlichen, nicht abwickelbaren Faltenbalg ist dessen mechanische Steifheit in Ausziehrichtung merklich geringer als quer zur Ausziehrichtung. Er weist im Längsschnitt die im Faltbereich geringeren Wandstärken auf, als die übrigen Bereiche des Faltenbalges, um ein Ausbrechen des Balges senkrecht zu seiner Ausziehrichtung zu verhindern. Er hat ferner mindestens parallel zueinander liegende schienenförmige Lager (51), mit welchen die Harmonika-Wandteile (53) schwenkbar verbunden sind, welche Lager (51) bei geschlossenem Balg eine innere und äussere geschlossene Wand bilden. Zwischen diesen Wänden liegen die Harmonika-Wandteile (53) aneinander. Dabei werden im Querschnitt gleichseitige Dreiecke aufweisende Hohlräume (55) begrenzt. Dieser Faltenbalg ermöglicht es, bei Verstellung der Tischauflagefläche das ästhetische Aeussere des Möbels zu wahren und trotzdem den inneren Aufbau zur Aufnahme von elektrischen Leitungen u.dgl. optimal zu gestalten.

FIG. 5

Faltenbalg für Büromöbel sowie Vorrichtung zum Nivellieren von Tischauflageflächen

Die vorliegende Erfindung betrifft einen räumlichen, nicht abwickelbaren Faltenbalg sowie eine Vorrichtung zum Nivellieren von Tischauflageflächen, insbesondere von Büromöbeln.

Je mehr Möglichkeiten einer Verstellung, insbesondere der Tischauflagefläche, ein Möbel bietet, je weniger diese Verstellmöglichkeiten von aussen störend wirken, je einfacher die Verstellung von aussen betätigbar ist und je weniger die Verstellkonstruktion die Gestaltung des Möbels beeinflusst, umso besser kommt es bei der Kundschaft an.

In diesem Sinne zeichnen sich der Faltenbalg und die Vorrichtung zum Nivellieren durch je einen der Ansprüche aus.

Die Erfindung wird anschliessend beispielsweise anhand einer Zeichnung erläutert:

Es zeigen:

Fig. 1 eine perspektivische Darstellung eines Teils eines Büromöbels mit verstellbarer Tischplatte,

Fig. 2 den Oberteil des Büromöbels gemäss Fig. 1, in Pfeilrichtung "A" gesehen,

Fig. 3 einen Schnitt durch Fig. 2 nach Schnittlinie X-X,

Fig. 4 eine Ansicht eines Faltenbalges zu einem Büromöbel nach Fig. 1, in Aufsicht gemäss Pfeilrichtung "B" in Fig. 5,

Fig. 5 eine Seitenansicht des Faltenbalges nach Fig. 4,

Fig. 6 den Faltenbalg nach Fig. 5 in ausgezogener Lage,

Fig. 7 einen Schnitt nach Schnittlinie XIV-XIV der Fig. 6,

Fig. 8 einen Schnitt nach Schnittlinie XV-XV der Fig. 6,

Fig. 9 einen Schnitt nach Schnittlinie XVI-XVI der Fig. 6,

Fig. 10 einen Ausschnitt aus einem Möbel gemäss Fig. 1 mit teilweise weggebrochenen Teilen eines Tischbeines,

Fig. 11 eine Aufsicht auf den Ausschnitt gemäss Fig. 10.

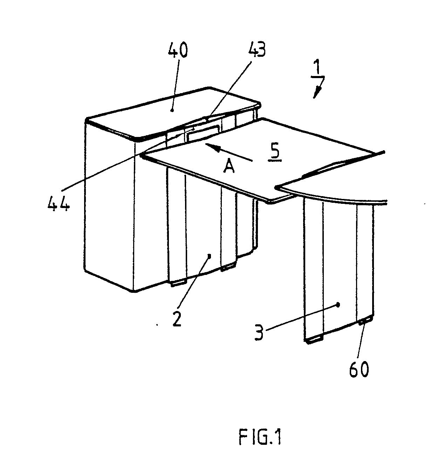

In Fig. 1 ist ein verstellbarer Tisch 1 mit den Tischbeinen 2 und 3 sowie einer Tischplatte 5 ersichtlich. Die Tischplatte 5 ist in der Höhe und bezüglich Neigung verstellbar. Das Möbel gemäss Fig. 1 zeigt ferner einen Korpus 40, welcher mit dem einen Tischbein 2 verbunden ist. Das Tischbein 2 weist eine obere Abschlussfläche 43 auf. Es ist in seinem oberen Teil mit einer Oeffnung versehen, welche durch einen Faltenbalg 44 abgedeckt ist, so dass bei jeder Lage der Tischplatte 5 die Oeffnung ins Innere des Tischbeines 2 durch den Balg verschlossen wird.

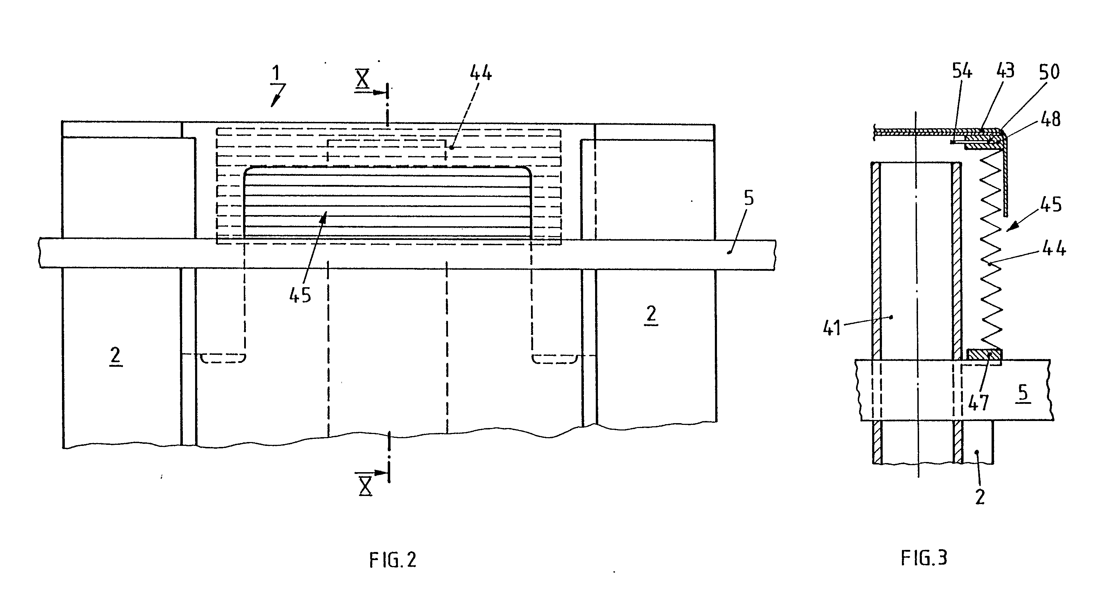

In Fig. 2 ist der obere Teil des Tischbeines 2 dargestellt, gesehen von der Seite in Richtung des Pfeiles "A" nach Fig. 1. Der die Oeffnung 45 verschliessende Faltenbalg 44 hat oben eine, den Faltenbalgschienenkopf 48 kennzeichnende Verdikkung und unten einen Faltenbalgschienenfuss 47 angebracht, wie dies anhand weiterer Fig. nachfolgend erläutert wird. In Fig. 3 ist ferner der obere Teil einer Mittelstütze 41 dargestellt.

Beim Verstellen der Tischplatte 5, insbesondere deren Höhenverstellung, wird der Faltenbalg 44, dessen Fussende mit dem Faltenbalgschienenfuss 47 zusammen mit der Tischplatte 5 verstellt wird, mehr oder weniger ausgezogen bzw. in eine volle Schliesslage gefaltet.

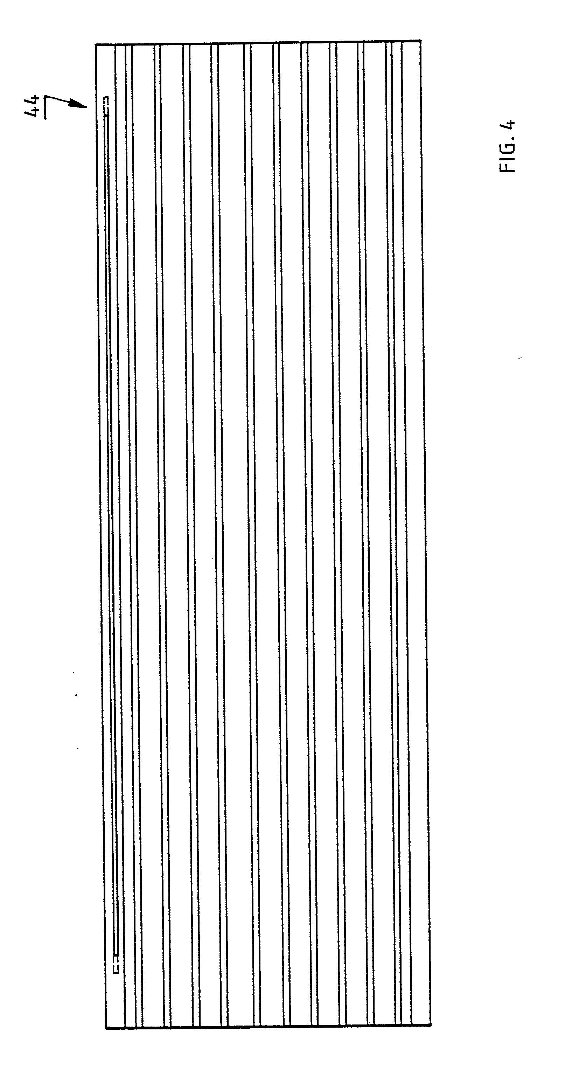

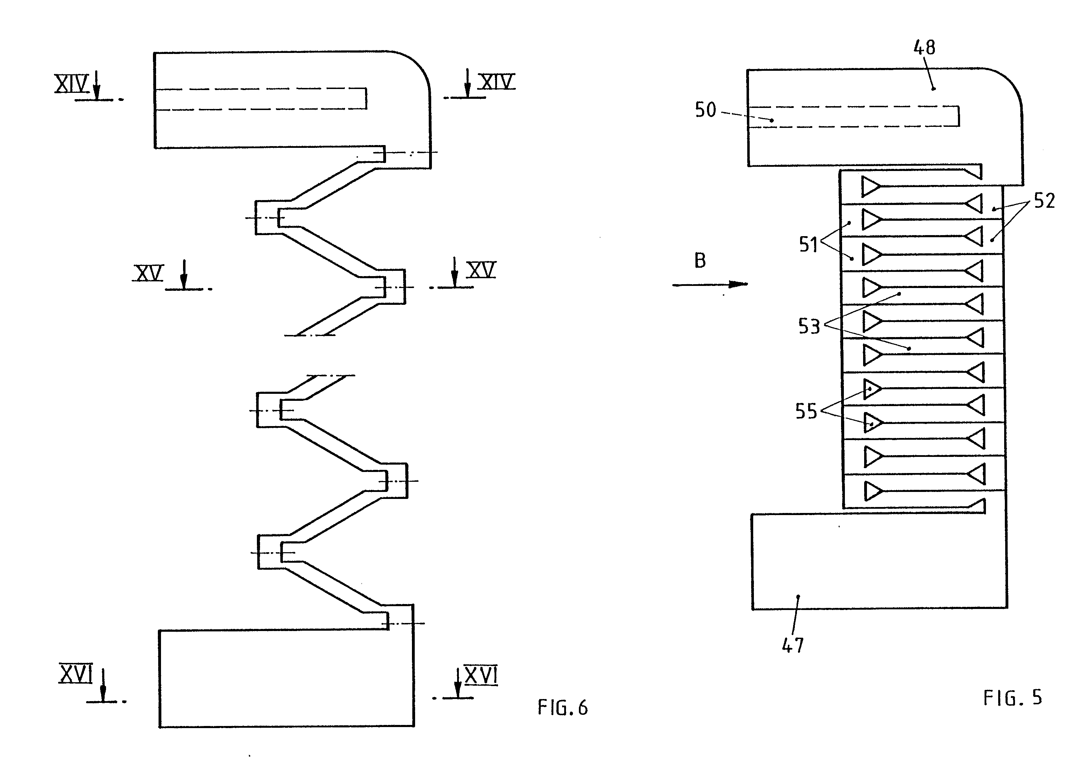

Wie die Fig. 4 bis 9 zeigen, ist dieser Faltenbalg nicht als ebenflächiges Gebilde vorgesehen, sondern entsprechend der Form der Tischbeine 2 und 3, in der Mittelknickebene 56 geknickt. Der Faltenbalg 44 ist im Faltenbalgschienenkopf 48 mit einer Längsnut 50 versehen, welche dessen Festhalten in einer Schiene ermöglicht. Dieser Faltenbalg 44 ist mit Innenlagern 51 und Aussenlagern 52 versehen, die durch Harmonikawände 53 miteinander verbunden sind. Die Abstände und Winkel dieser Teile sind derart, dass in völlig zusammengefaltetem Zustand Hohlräume 55 entstehen, welche einen Querschnitt von gleichseitigen Dreiekken aufweisen. Um der Form der Tischbeine 2 und 3 gerecht zu werden, sind, wie erwähnt, die in zwei Ebenen verlaufenden Faltenbalgteile des Faltenbalges 44 in einer Mittelknickebene 56 geknickt.

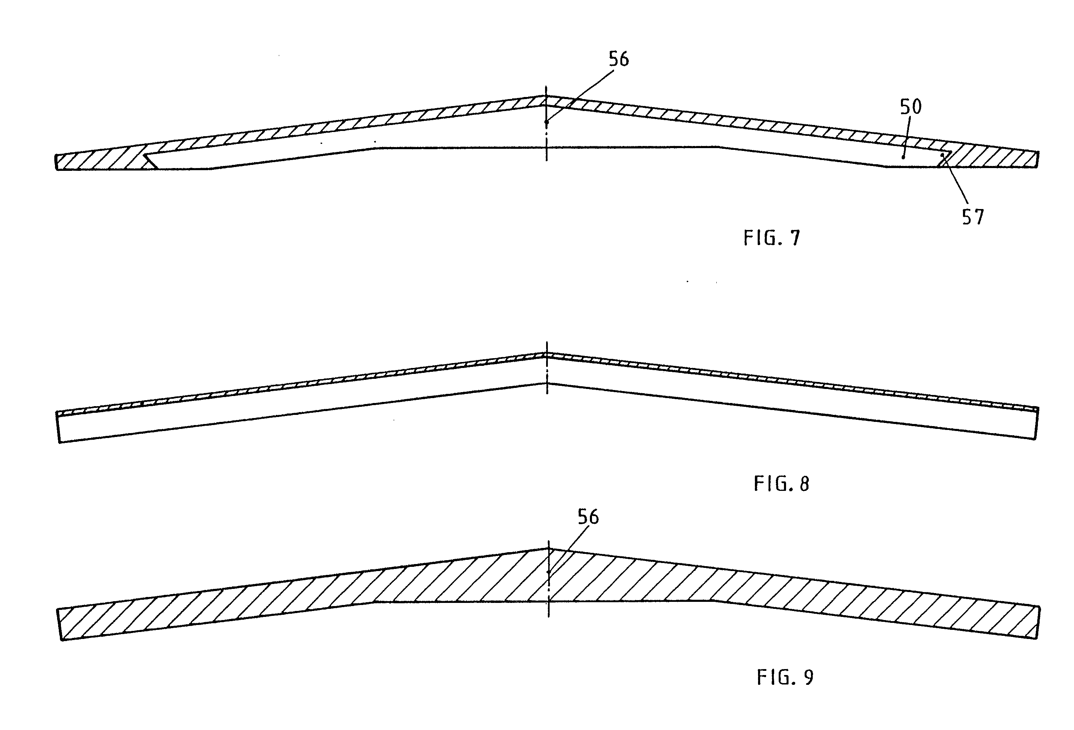

Wie in Fig. 7 ersichtlich, bildet die Längsnut 50 im Faltenbalgschienenkopf 48 beidseits je eine Tasche 57, welche die sichere Verbindung des Faltenbalgschienenkopfes 48 mit der Schiene 54 sicherstellen.

Die Faltung des Faltenbalges 44 kann selbstverständlich auch auf andere Art als durch gleichseitige Dreiecke sich ergebende Hohlräume vorgesehen werden.

Die Querschnitte des Faltenbalges sind in drei Schnittebenen in den Fig. 7 bis 9 ersichtlich.

Die rechtwinklig zur Bewegung des Faltenbalges 44 vorhandene Formsteifheit ist wesentlich grösser als diejenige in dessen Bewegungsrichtung. Dies kann durch die Dimensionierung der Teile des Faltenbalges und/oder die Materialwahl und Anordnung erfolgen. Dies verhindert ein Ausbrechen des Balges.

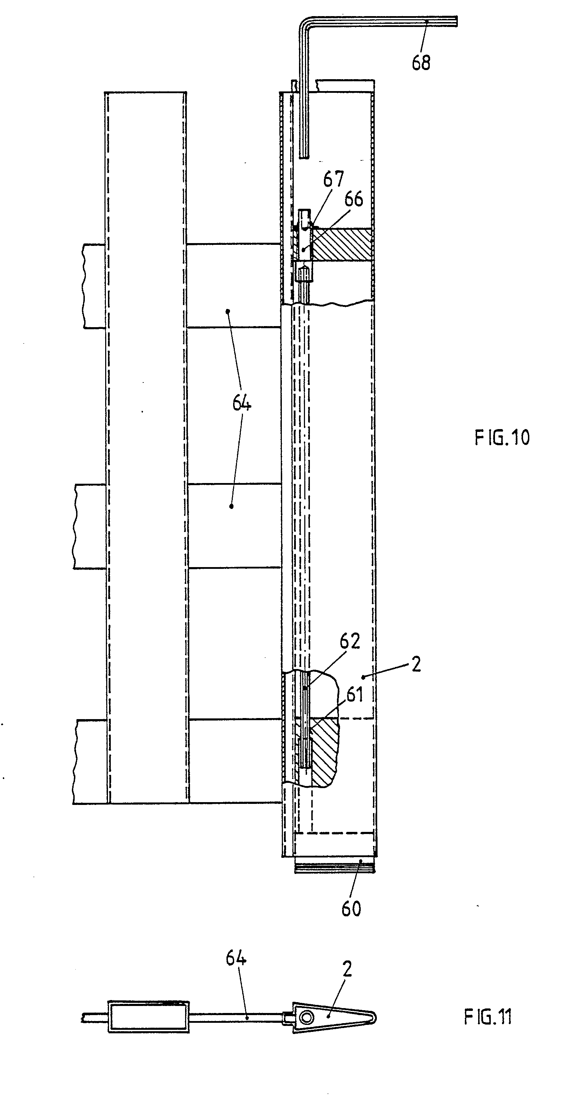

Zwecks müheloser Verstellung der Tischhöhe und der Nivellierung der Tischplatte 5 ist, wie die Fig. 10 und 11 zeigen, vorgesehen, den in den Tischbeinen 2 und 3 beweglichen Fuss 60 mit Hilfe einer Gewindebohrung 61 im Fusse 60 sowie einer in diese eingeschraubte Gewindespindel 62 zu verstellen. Zu diesem Zweck ist in einer Quertraverse 64 eine Mutter achsial fest drehbeweglich gehalten, im unteren Teil mittels eines Anschlages, im oberen Teil mittels eines Sperringes 67, wobei die Mutter 66 von oben mittels eines Steckschlüssels 68 drehbar ist und damit der Fuss 60 gegenüber dem Tischbein 2 bzw. 3 verstellt werden kann.

Alle in der Beschreibung und/oder den Figuren dargestellten Einzelteile und Einzelmerkmale sowie deren Permutationen, Kombinationen und Variationen sind erfinderisch, und zwar für n Einzelteile und Einzelmerkmale mit den Werten n = 1 bis n

und durch mindestens eine versteckte, von aussen zugängliche Gewindespindel (62) miteinander wirkverbunden sind.

Ansprüche

1. Räumlicher, nicht abwickelbarer Faltenbalg, vorzugsweise nach mindestens einem der Ansprüche, dadurch gekennzeichnet, dass dessen mechanische Steifheit in Ausziehrichtung merklich geringer ist, als quer zur Ausziehrichtung.

2. Faltenbalg, vorzugsweise nach mindestens einem der Ansprüche, dadurch gekennzeichnet, dass im Längsschnitt die Faltbereiche geringere Wandstärken aufweisen, als die übrigen Bereiche des Faltenbalges, um ein Ausbrechen des Balges senkrecht zu seiner Ausziehrichtung zu verhindern.

3. Faltenbalg, vorzugsweise nach mindestens einem der Ansprüche, dadurch gekennzeichnet, dass dessen mechanische Steifheit in Ausziehrichtung wesentlich geringer ist als rechtwinklig dazu.

4. Faltenbalg, vorzugsweise nach mindestens einem der Ansprüche, dadurch gekennzeichnet, dass mindestens das eine Balgende schienenförmig ausgebildet ist und eine der Befestigung dienende Längsnut (50) aufweist, welche vorzugsweise in den Seitenecken Haltetaschen (57) hat.

5. Faltenbalg, vorzugsweise nach mindestens einem der Ansprüche, dadurch gekennzeichnet, dass der Balg um eine zur Bewegungsrichtung parallele Achse geknickt ist.

6. Faltenbalg, vorzugsweise nach mindestens einem der Ansprüche, gekennzeichnet durch parallel zueinander liegende schienenförmige Lager (51), mit welchen die Harmonika-Wandteile (53) schwenkbar verbunden sind, welche Lager (51) bei geschlossenem Balg eine innere und äussere geschlossene Wand bilden, zwischen welchen Wänden die Harmonika-Wandteile (53) aneinanderliegen, wobei vorzugsweise im Querschnitt, insbesondere gleichseitige Dreiecke aufweisende Hohlräume (55) begrenzt werden. (Fig. 5)

7. Vorrichtung zum Nivellieren von Tischauflageflächen, insbesondere von Büromöbeln, vorzugsweise nach mindestens einem der Ansprüche, dadurch gekennzeichnet, dass die Tischplatte (5) und die Bodenauflage (60) zueinander höhenverstellbar

FIG.1

FIG.3

FIG.2

FIG. 4

FIG. 5

FIG.6

EP 0 375 626 A2

56

50

57

FIG. 7

FIG. 8

56

FIG. 9

FIG.10

FIG.11